# EUROPÄISCHE PATENTSCHRIFT

(11) **EP 3 707 479 B1**
(45) Veröffentlichungstag und Bekanntmachung des Hinweises auf die Patenterteilung: **06.07.2022**
(21) Anmeldenummer: 18803912.7
(22) Anmeldetag: 09.11.2018
(51) Int. Cl.: G01D 5/24, G01P 3/483, G01P 13/04

(54) **POSITIONIERUNG VON MOTOREN MITTELS KAPAZITIVER MESSUNG**
POSITIONING MOTORS BY MEANS OF CAPACITIVE MEASURING
POSITIONNEMENT DE MOTEURS AU MOYEN D'UNE MESURE CAPACITIVE

(30) Priorität: 09.11.2017 DE 102017126271
(43) Veröffentlichungstag der Anmeldung: 16.09.2020
(73) Patentinhaber: Webasto SE, 82131 Stockdorf (DE)
(72) Erfinder: EHRICH, Enrico, 82131 Stockdorf (DE); HOVAN, Jani, 82131 Stockdorf (DE)
(74) Vertreter: Zech, Stefan Markus
(86) Internationale Anmeldenummer: PCT/EP2018/080792
(87) Internationale Veröffentlichungsnummer: WO 2019/092192

(56) Entgegenhaltungen:
- EP-A1- 0 551 066
- WO-A2-98/43046
- DE-A1-102005 046 099

## Beschreibung

Die Erfindung betrifft eine Messanordnung und ein Verfahren zum Ermitteln der Drehposition, Drehzahl und/oder Drehrichtung einer Welle, insbesondere eines Elektromotors einer elektromotorisch verstellbaren Einrichtung eines Fahrzeugs, wie eines Schiebedaches, Fensterhebers, Außenspiegels, Sitzes, Cabriodaches oder einer Verriegelung.

In modernen Fahrzeugen in eine Vielzahl von Elektromotoren verbaut, beispielsweise zum Antrieb von Pumpen oder Gebläsen, sowie zur Betätigung von elektromotorisch verstellbaren Einrichtungen eines Fahrzeugs wie zum Beispiel eines Fensterhebers, Außenspiegels oder Sitzes. Zur Steuerung der genannten Fahrzeugeinrichtungen werden in Fahrzeugen heutzutage eine Vielzahl von Sensoren zur automatischen Erfassung der Position und Geschwindigkeit der Drehbewegung des jeweiligen Antriebsmotors verbaut. Berührungslose Sensoren zur Erfassung der Drehposition und -geschwindigkeit einer An- oder Abtriebswelle eines Elektromotors sind aus dem Stand der Technik bekannt.

Häufig werden Hall-Sensoren eingesetzt, die basierend auf dem physikalischen Hall-Effekt im Zusammenwirken eines stromdurchflossenen Sensors mit einem Magnetfeld berührungslos die Drehbewegung einer Welle erfassen. Üblicherweise wir das Magnetfeld von einem Permanentmagneten, z. B. einem Magnetrad, erzeugt, der bzw. das an der Welle angebracht ist, deren Drehbewegung erfasst werden soll. Häufig werden zwei Hall-Sensoren eingesetzt, um neben der (inkrementellen) Drehposition und -geschwindigkeit bzw. Drehzahl auch die Drehrichtung der Welle erfassen zu können. Solche Sensoranordnungen haben den Nachteil, dass sie relativ aufwendig und teuer sind. Neben den Hall-Sensoren und einem Magnetrad im Motor, sind zusätzliche elektronische Bauteile auf einer separaten Platine notwendig.

Aus dem Stand der Technik sind auch berührungslose Verfahren zur Bestimmung der Drehposition und -geschwindigkeit für Gleichstrommotoren bekannt, die auf der Erfassung des Rippelstroms durch den Anker eines Gleichstrommotors beruhen. Dabei werden durch eine Auswertungselektronik sensorfrei die Stromrippel des Ankerstroms gezählt, die durch die Drehung des Motors erzeugt werden (engl.: "Ripple Counting"). Nachteilig an diesem Messverfahren ist, dass diese Methode relativ aufwendig ist, insbesondere im Hinblick auf die erforderliche Aufbereitung des erforderlichen Messsignals und die Rechenleistung der Auswerteelektronik.

Das Dokument DE 10 2005 046099 A1 beschreibt eine Vorrichtung zur Erfassung von Schaltstellungen eines Schaltmittels, nämlich eines Lenkstockhalters, eines Kraftfahrzeugs. Die Vorrichtung umfasst zwei plattenförmige elektrische Ladungsträger, die in einer Ebene angeordnet sind, zu der die Achse eines mit der Bewegung des Schaltmittels gekoppelten Bauteils parallel verläuft.

Ausgehend von diesem Stand der Technik hat die vorliegende Erfindung die Aufgabe, eine Messanordnung zum Ermitteln der Drehposition, Drehzahl und/oder Drehrichtung einer Welle bereitzustellen, die einfacher umsetzbar ist, insbesondere mit weniger Aufwand im Hinblick auf die verbauten Komponenten, sowie ein entsprechendes Verfahren. Insbesondere soll die Drehposition, Drehgeschwindigkeit und/oder Drehrichtung der Welle möglichst kostengünstig, zugleich aber möglichst zuverlässig und genau, ermittelbar sein.

Die genannte Aufgabe wird durch eine Messanordnung nach Anspruch 1, ein Verfahren nach Anspruch 14 sowie eine Verwendung nach Anspruch 15 gelöst.

Insbesondere wird die Aufgabe gelöst durch eine Messanordnung zum Ermitteln der Drehposition, Drehzahl und/oder Drehrichtung einer Welle, insbesondere eines Elektromotors einer elektromotorisch verstellbaren Einrichtung eines Fahrzeugs, umfassend:
- mindestens eine erste Elektrode und mindestens eine zweite Elektrode, die jeweils Kondensatorelemente bilden;
   wobei an die Elektroden eine elektrische Spannung derart anlegbar ist, dass die Elektroden ein elektrisches Feld erzeugen;
- eine drehbare Welle, insbesondere Motorwelle, mit einem Messabschnitt, der eine Unrundheit aufweist,
   wobei der Messabschnitt derart relativ zu den Elektroden angeordnet ist, dass eine Drehung der Welle eine Änderung des elektrischen Feldes bewirkt,
   wobei die Wellenachse senkrecht zu einer Elektrodenebene angeordnet ist, in der die Elektroden angeordnet sind;
- eine mit einer Elektrode leitend verbundene Auswertungseinheit, die dazu ausgebildet ist, eine Änderung des elektrischen Feldes kapazitiv zu erfassen, insbesondere in Form einer Änderung einer an einer Elektrode anliegenden Spannung.

Unter einer Unrundheit kann im allgemeinsten Sinn der Erfindung eine Abweichung der Umfangslinie des Messabschnitts der Welle in Schnitten senkrecht zur Wellenachse von einem ideal runden Umfangskreis verstanden werden, sofern das Maß der Unrundheit ausreichend groß ist, um bei einer gegebenen Konfiguration der Messanordnung eine messbare Änderung des elektrischen Feldes zu bewirken. Insbesondere kann in einem Fall, in dem der Messabschnitt näher an den Elektroden angeordnet ist, eine geringere Unrundheit zur messbaren Änderung eines elektrischen Feldes ausreichen, als in einem Fall, in dem der Messabschnitt weiter von den Elektroden entfernt angeordnet ist. In einem engeren Sinn der Erfindung könnten reine Fertigungstoleranzen eines fertigungsbedingt nur näherungsweise runden Messabschnitts nicht als eine erfindungsgemäße Unrundheit verstanden werden. Eine Unrundheit kann insbesondere durch eine Exzentrizität relativ zur Wellenachse oder durch ein Wellenprofil mit nicht-rotationssymmetrischem Querschnitt erzeugt werden.

Vorzugsweise bilden eine erste und eine zweite Elektrode miteinander jeweils ein Elektrodenpaar, das insbesondere zwei Kondensatorelemente ausbildet, die einen Kondensator mit einer bestimmten elektrischen Kapazität bilden. Es können mehrere Elektrodenpaare vorgesehen sein. Insbesondere besteht zwischen einer ersten und einer zweiten Elektrode eine kapazitive Kopplung. Eine erfindungsgemäße Änderung des elektrischen Feldes ist insbesondere insofern kapazitiv erfassbar, als die bewirkte Änderung des elektrischen Feldes ausreichend groß ist, um eine messbare Änderung der Kapazität eines Kondensators zu bewirken. Das elektrische Feld ist insbesondere ein elektrostatisches Feld, das vorzugsweise im Umfeld der Elektroden erzeugt wird. Insbesondere ist durch eine Rotation der Welle eine zyklische Änderung des elektrischen Feldes messbar, insbesondere gegenüber einem Referenzzustand, der als ein unverändertes elektrisches Feld verstanden werden kann. Die Auswertungseinheit ist insbesondere dazu ausgebildet, basierend auf der erfassten Änderung des elektrischen Feldes eine Drehposition, Drehzahl und/oder Drehrichtung der Welle zu ermitteln. Insbesondere erfasst die Auswertungseinheit die Anzahl der durch die Unebenheit der Welle erzeugten Änderungen des elektrischen Feldes, bzw. der bewirkten Kapazitätsänderungen, vorzugsweise über die Zeit, um daraus eine Drehposition oder Drehzahl bzw. Drehgeschwindigkeit zu berechnen. Die Auswertungseinheit kann dazu ausgebildet sein, verschiedene kapazitive Erfassungs- bzw. Messverfahren vorrichtungstechnisch und/oder verfahrenstechnisch umzusetzen, vorzugsweise durch eine geeignete Auswertungsschaltung, die vorzugsweise elektronische und/oder elektrische Bauteile bzw. Baugruppen umfasst.

Insbesondere kann eine Änderung des elektrischen Feldes durch die Erfassung einer an einer Elektrode anliegenden Spannung, bzw. Spannungsänderung, kapazitiv erfasst werden, beispielsweise ähnlich wie bei einem projektivkapazitiven Messverfahren, das üblicherweise für Touchscreens verwendet wird. Dabei kann an eine erste Elektrode, insbesondere als eine Sende- oder Treiberelektrode, eine Spannung, z. B. in Form von Spannungspulsen, angelegt werden und an einer zweiten Elektrode, insbesondere als eine Empfangselektrode, eine Spannung abgegriffen werden. Dabei kann eine Kapazitätsänderung des von den Elektroden gebildeten Kondensators durch eine Änderung des elektrischen Feldes eine (messbare) Spannungsänderung, vorzugsweise an der Empfangselektrode, bewirken. Alternativ kann eine Änderung des elektrischen Feldes durch die Erfassung eines geänderten Resonanzverhaltens eines von den Elektroden gebildeten Kondensators kapazitiv erfasst werden. Dafür kann ein Kondensator mit einer Induktivität zu einem Schwingkreis verschaltet sein. Beispielsweise kann eine Frequenzverschiebung oder eine Phasenverschiebung, vorzugsweise einer an einer Elektrode anliegenden Spannung, erfasst werden.

Unter einer Drehposition kann sowohl eine Winkeländerung (Inkrementalwert) als auch ein absoluter Winkel (Absolutwert) verstanden werden. Neben oder anstatt der Drehzahl kann auch die Drehgeschwindigkeit ermittelbar sein. Die Welle und der Messabschnitt können jeweils einteilig oder mehrteilig ausgeführt sein, wobei der Messabschnitt einteilig mit der Welle ausgeführt oder als separates Bauteil drehfest mit der Welle verbunden sein kann. Die Elektroden sind vorzugsweise ortsfest relativ zur drehbaren Welle angeordnet. Die Elektroden, bzw. die Kondensatorelemente, können an die Form der Welle bzw. des Messabschnitts, angepasst sein. Beispielsweise können die Kondensatorelemente der Elektroden kreissegmentförmige Abschnitte aufweisen, die vorzugsweise annähernd einen Radius eines Umfangskreises des Messabschnitts aufweisen. Der Messabschnitt ist vorzugsweise elektrisch leitfähig, kann aber prinzipiell auch aus einem dielektrischen Material sein, sofern eine Drehung der Welle eine (messbare) Änderung des elektrischen Feldes bewirkt. Die Messanordnung umfasst vorzugsweise einen Mikrocontroller, der insbesondere mit mindestens einer Elektrode und/oder der Auswertungseinheit, vorzugsweise elektrisch, leitend verbunden ist. Die Auswertungseinheit und der Mikrocontroller können eine Einheit bilden, wobei der Mikrocontroller in die Auswertungseinheit integriert sein kann, oder umgekehrt. Die Auswertungseinheit kann dazu ausgebildet sein, einen Algorithmus zur Berechnung der Drehposition, Drehzahl und/oder Drehrichtung auszuführen, insbesondere basierend auf einem implementierten Computerprogramm.

Der Erfindung liegt die Idee zugrunde, eine durch eine Drehung einer Welle bewirkte Änderung eines elektrischen Feldes kapazitiv zu erfassen, um die Drehposition, Drehgeschwindigkeit und/oder Drehrichtung der Welle daraus zu ermitteln. Indem die Welle einen Messabschnitt mit einer Unrundheit aufweist, erzeugt eine Rotation bzw. Drehung der Welle in einem elektrischen Feld eine Änderung dieses Feldes, die insbesondere als eine lokale Verformung der Feldlinien bzw. eine Änderung der Feldstärke verstanden werden kann. Insbesondere ist die Änderung des elektrischen Feldes umso größer, je größer die Unrundheit ist und je größer die Feldliniendichte ist, durch die sich die Unrundheit bewegt. Beispielsweise wird bei einer konstanten Drehzahl der Welle und genau einer Unrundheit über den Umfang der Welle, z. B. einer einzigen radialen Messerhebung, pro Umdrehung genau eine Änderung des elektrischen Feldes bewirkt, die von der Auswertungseinheit kapazitiv erfasst, vorzugsweise gezählt, wird. Eine Drehung der Welle führt vorzugsweise zu periodischen Änderungen des elektrischen Feldes. Eine Erhöhung der Drehgeschwindigkeit der Welle würde zu einer Erhöhung der Frequenz der Änderungen des elektrischen Feldes führen. Eine erfindungsgemäße Messanordnung ermöglicht eine berührungslose Ermittlung der Drehposition, Drehzahl und/oder Drehrichtung einer Welle, die einfach umsetzbar ist. Gegenüber dem Stand der Technik kann auf ein Magnetrad und Hall-Sensoren verzichtet werden. Auch die kapazitive Erfassung der Änderungen des elektrischen Feldes ist mit geringem schaltungstechnischem Aufwand umsetzbar. Dadurch ist die Messanordnung kostengünstig und für Anwendungen mit großer Stückzahl, insbesondere zum Einsatz für verschiedene elektromotorisch betätigte Einrichtungen in Fahrzeugen, wie für Schiebedächer, Fensterheber, Außenspiegel, Sitze, Cabriodächer oder Verriegelungen, geeignet.

In einer vorteilhaften Weiterbildung der Erfindung sind mindestens zwei Elektrodenpaare aus jeweils ersten und zweiten Elektroden vorgesehen, wobei insbesondere ein erstes Elektrodenpaar zum Ermitteln der Drehposition und/oder Drehzahl der Welle und insbesondere ein zweites Elektrodenpaar zum Ermitteln der Drehrichtung der Welle ausgebildet ist. Mehrere Elektrodenpaare, die vorzugsweise über den Umfang des Messabschnitts verteilt angeordnet sind, haben den Vorteil, dass die Ermittlung der Drehposition und/oder der Drehzahl genauer möglich ist. Ein zweites Elektrodenpaar hat insbesondere den Vorteil, dass die Drehrichtung der Welle ermittelbar ist. Beispielsweise ist durch eine Erfassung der Reihenfolge einer zeitlich versetzt von zwei verschiedenen Elektrodenpaaren erfassten Änderung des elektrischen Feldes, die vorzugsweise durch dieselbe Unebenheit des Messabschnitts bewirkt wird, die Drehrichtung ermittelbar.

In einer vorteilhaften Weiterbildung der Erfindung weist der Messabschnitt der Welle ein nicht-rotationssymmetrisches, insbesondere zur Wellenachse punktsymmetrisches, Wellenprofil, vorzugsweise mit mindestens einer radialen Messerhebung, auf. Ein Wellenprofil ist insbesondere ein Querschnittsprofil der Welle, vorzugsweise senkrecht zur Wellenachse. Ein Wellenprofil beschreibt bei Rotation der Welle insbesondere einen Umfangskopfkreis (größerer Radius) und einen Umfangsfußkreis (kleinerer Radius). Ein nicht-rotationssymmetrisches Wellenprofil lässt sich bei einer beliebigen Verdrehung um die Wellenachse nicht deckungsgleich ineinander überführen, sodass eine Unebenheit im Sinn der Erfindung durch die fehlende Rotationssymmetrie gegeben ist. Eine derartige Unrundheit des Messabschnitts kann durch einzelne radiale Messerhebungen, beispielsweise in Form eines radialen Rücksprungs, radialen Vorsprungs, einer Einkerbung, axialen Nut oder eines exzentrisch befestigten Elements, wie einer Schraube, einer Auftragsschweißung, einer Passfeder, auf der Welle oder durch die Welle hindurchgestecktes Element, ausgeführt ein. Es können auch mehrere radiale Messerhebungen vorgesehen sein. Das Wellenprofil kann beispielsweise ein Zahnprofil oder ein polygonales Profil sein. Ein zur Wellenachse punktsymmetrisches Wellenprofil hat den Vorteil, dass die Welle, bzw. der Messabschnitt, keine Unwucht aufweist.

In einer vorteilhaften Weiterbildung der Erfindung weist das Wellenprofil über den Umgang, vorzugsweise gleichmäßig, verteilte radiale Messerhebungen auf. Ein solches Wellenprofil ermöglicht eine höhere Abtastfrequenz der Drehbewegung der Welle, da pro Umdrehung der Welle mehrere Änderungen des elektrischen Feldes bewirkt werden. Insbesondere entspricht die Anzahl der erfassten Änderungen der Anzahl der Messerhebungen. Dadurch wird die Genauigkeit der Ermittlung der Drehposition und/oder Drehzahl erhöht, insbesondere während Phasen, in denen die Drehzahl variiert.

In einer vorteilhaften Weiterbildung der Erfindung erstrecken sich mindestens zwei Messerhebungen unterschiedlich weit in radialer Richtung. Vorzugsweise sind die Abstände eines Endpunkts einer Messerhebung von der Wellenachse jeweils unterschiedlich. Insbesondere können verschiedenen Messerhebungen verschiedene Umfangskopfkreise zugeordnet werden. Insbesondere könnte genau eine Messerhebung sich weiter in radiale Richtung erstrecken als die übrigen Messerhebungen. Auf diese Weise sind insbesondere Messfehler korrigierbar, beispielsweise falls eine der Messerhebungen aufgrund eines Messfehlers oder einer Störgröße nicht erfasst bzw. mitgezählt wird. Zum Beispiel wäre durch eine einzelne höhere Messerhebung eine Zuordnung eines erfassten Messsignals zu einer Umdrehung der Welle weiterhin möglich. Auch eine Uneindeutigkeit der Zuordnung einer erfassten Änderung einer Messerhebung zu einem Elektrodenpaar, insbesondere bei der Ermittlung der Drehrichtung, kann dadurch aufgelöst werden. Die Zuverlässigkeit der Messanordnung würde dadurch erhöht.

In einer vorteilhaften Weiterbildung der Erfindung ist das Wellenprofil ein Zahnprofil oder ein polygonales Profil, wobei das Wellenprofil vorzugsweise 2 bis 16, weiter vorzugsweise 2 bis 12, weiter vorzugsweise 2 bis 8, weiter vorzugsweise 2 bis 6, beispielsweise 2, 3 oder 4 radiale Messerhebungen aufweist. Bei einem Zahnprofil bilden die einzelnen Zähne jeweils eine radiale Messerhebung. Bei einem polygonalen Profil bilden die Kanten des polygonalen Querschnitts jeweils eine Messerhebung. Je höher die Anzahl der Messerhebungen ist, desto höher ist die Abtast- bzw. Erfassungsfrequenz (Messfrequenz) der Messanordnung.

In einer vorteilhaften Weiterbildung der Erfindung ist die Wellenachse parallel zu einer Mittelebene der Elektroden und senkrecht zu einer Elektrodenebene, in der die Elektroden angeordnet sind, angeordnet. Eine Elektrodenebene ist insbesondere durch eine Ebene definiert, in der sich, vorzugsweise flächig ausgebildete, z. B. plattenförmig oder in Form von Elektrodenpads, Kondensatorelemente der Elektroden erstrecken. Die Welle kann zwischen den Elektroden oder seitlich versetzt dazu angeordnet sein.

In einer vorteilhaften Weiterbildung der Erfindung umfasst die Messanordnung eine Leiterplatte, auf der die Elektroden, und vorzugsweise die Auswertungseinheit, angeordnet sind. Die Leiterplatte definiert insbesondere die Elektrodenebene. Vorzugsweise ist die Leiterplatte als eine elektronische Platine ausgebildet, auf der die Elektroden und vorzugsweise die Auswertungseinheit, vorzugsweise durch Leiterbahnen elektrisch leitend miteinander verbunden, befestigt sind. Durch eine Leiterplatte ist die Messanordnung (teilweise) vormontierbar und einfach relativ zur Welle positionierbar, um die erfindungsgemäße Messanordnung zu montieren.

In einer vorteilhaften Weiterbildung der Erfindung weist die Leiterplatte eine, vorzugsweise kreisförmige, Messausnehmung auf, wobei sich insbesondere der Messabschnitt der Welle in die Messausnehmung hinein erstreckt, vorzugsweise hindurchragt. Die Wellenachse verläuft senkrecht zur Elektrodenebene. Dadurch lässt sich eine flache Bauform der Messanordnung erreichen. Außerdem kann die vorgesehene Positionierung der Welle relativ zu den Elektroden bei der Montage einfach eingehalten werden. Die Elektroden können über die Messausnehmung, vorzugsweise nach innen zum Messabschnitt hin, überstehen.

In einer vorteilhaften Weiterbildung der Erfindung umfasst die Messanordnung einen Mikrocontroller, der insbesondere dazu ausgebildet ist, eine Elektrode mit einer, vorzugsweise gepulsten, Gleichspannung zu versorgen. Vorzugsweise wird eine gleichförmige pulsierende Gleichspannung an eine der Elektroden (Sender- bzw. Treiberelektrode) angelegt. Eine andere Elektrode kann z. B. auf Masse gelegt sein. Beispielsweise wird eine Rechteckspannung mit Spannungsamplitude von 0 V und 5 V verwendet. In Abhängigkeit des verwendeten kapazitiven Messverfahrens sind auch Ausführungsformen möglich, bei denen eine Wechselspannung an eine Elektrode, bzw. ein Elektrodenpaar, angelegt wird.

In einer vorteilhaften Weiterbildung der Erfindung umfasst die Auswertungseinheit eine Filtereinheit, vorzugsweise einen Bandpassfilter, der insbesondere dazu ausgebildet ist, ein Frequenzband eines erfassten Messsignals passieren zu lassen. Das Frequenzband ist vorzugsweise einstellbar, insbesondere in Abhängigkeit der momentanen Drehzahl der Welle. Eine Filtereinheit hat den Vorteil, dass Störungen, z. B. in Form von Oberschwingungen, aus dem erfassten Messsignal herausgefiltert werden können. Dadurch würde die Zuverlässigkeit der Messanordnung erhöht.

In einer vorteilhaften Weiterbildung der Erfindung ist der Messabschnitt, insbesondere die Welle, elektrisch leitfähig, insbesondere aus einem metallischen Material. Ein elektrisch leitfähiger Messabschnitt hat den Vorteil, dass die Änderung des elektrischen Feldes durch die Unrundheit relativ groß und dadurch gut messbar ist.

In einer vorteilhaften Weiterbildung der Erfindung ist die Welle eine Motorabtriebswelle, insbesondere eines Elektromotors, vorzugsweise einer elektromotorisch verstellbaren Einrichtung eines Fahrzeugs, wie eines Schiebedaches, Fensterhebers, Außenspiegels, Sitzes, Cabriodaches oder einer Verriegelung.

Die Aufgabe wird weiterhin insbesondere gelöst durch ein Verfahren zum Ermitteln der Drehposition, Drehzahl und/oder Drehrichtung einer Welle, insbesondere eines Elektromotors einer elektromotorisch verstellbaren Einrichtung eines Fahrzeugs, insbesondere mit einer erfindungsgemäßen Messanordnung, umfassend die folgenden Schritte:
a) Bereitstellen mindestens einer ersten Elektrode und mindestens einer zweiten Elektrode, die jeweils Kondensatorelemente bilden;
b) Anlegen einer Spannung an die Elektroden, um ein elektrisches Feld zu erzeugen;
c) Drehen einer Welle, insbesondere Motorwelle, die einen Messabschnitt mit einer Unrundheit aufweist,
   wobei der Messabschnitt derart relativ zu den Elektroden angeordnet ist, dass eine Drehung der Welle eine Änderung des elektrischen Feldes bewirkt und
   die Wellenachse senkrecht zu einer Elektrodenebene angeordnet ist, in der die Elektroden angeordnet sind;
d) Erfassen der Änderung des elektrischen Feldes durch eine kapazitive Messung mit einer Auswertungseinheit, die mit einer Elektrode leitend verbunden ist, insbesondere durch Erfassen einer Änderung einer an einer Elektrode anliegenden Spannung;
e) Ermitteln der Drehposition, Drehzahl und/oder Drehrichtung der Welle durch die Auswertungseineit, basierend auf der erfassten Änderung des elektrischen Feldes.

Das Verfahren hat ähnliche Vorteile, wie diese bereits in Verbindung mit der erfindungsgemäßen Messanordnung beschrieben wurden und kann einige oder alle verfahrenstechnischen Merkmale umsetzen, die im Zusammenhang mit der Messanordnung beschrieben wurden.

Das Drehen der Welle, vorzugsweise Motorabtriebswelle, erfolgt insbesondere durch Betätigung eines Elektromotors, insbesondere einer elektromotorisch verstellbaren Einrichtung eines Fahrzeugs. Insbesondere wird die Anzahl der durch die Unebenheit der Welle erzeugten Änderungen des elektrischen Feldes, bzw. der bewirkten Kapazitätsänderungen, vorzugsweise über die Zeit, erfasst, um daraus eine Drehposition oder Drehzahl zu berechnen. Die Auswertungseinheit kann dazu ausgebildet sein, verschiedene kapazitive Erfassungs- bzw. Messverfahren vorrichtungstechnisch und/oder verfahrenstechnisch umzusetzen, vorzugsweise durch eine geeignete Auswertungsschaltung.

Die Aufgabe wird weiterhin innbesondere gelöst durch die Verwendung einer erfindungsgemäßen Messanordnung zum Ermitteln der Drehposition, Drehzahl und/oder Drehrichtung einer Welle eines Elektromotors einer elektromotorisch verstellbaren Einrichtung eines Fahrzeugs, wie eines Schiebedaches, Fensterhebers, Außenspiegels, Sitzes, Cabriodaches oder einer Verriegelung. Die erfindungsgemäße Messvorrichtung ist einfach, insbesondere kostengünstig, umsetzbar und insbesondere für den Einsatz für Anwendungen mit hoher Stückzahl, wie für elektromotorisch verstellbare Einrichtungen in Fahrzeugen, geeignet.

Ausführungsbeispiele der Erfindung werden nachfolgend anhand der Zeichnungen näher erläutert. Hierbei zeigen:
- Figur 1A: eine schematische Darstellung einer ersten Ausführungsform einer erfindungsgemäßen Messanordnung, wobei sich die Welle in einer ersten Drehposition befindet;
- Figur 1B: eine schematische Darstellung der Ausführungsform nach Figur 1A, wobei sich die Welle in einer zweiten Drehposition befindet;
- Figur 2: eine schematische Darstellung einer zweiten Ausführungsform einer erfindungsgemäßen Messanordnung mit zwei Elektronenpaaren.

In der nachfolgenden Beschreibung der Erfindung werden für gleiche und gleich wirkende Elemente dieselben Bezugszeichen verwendet.

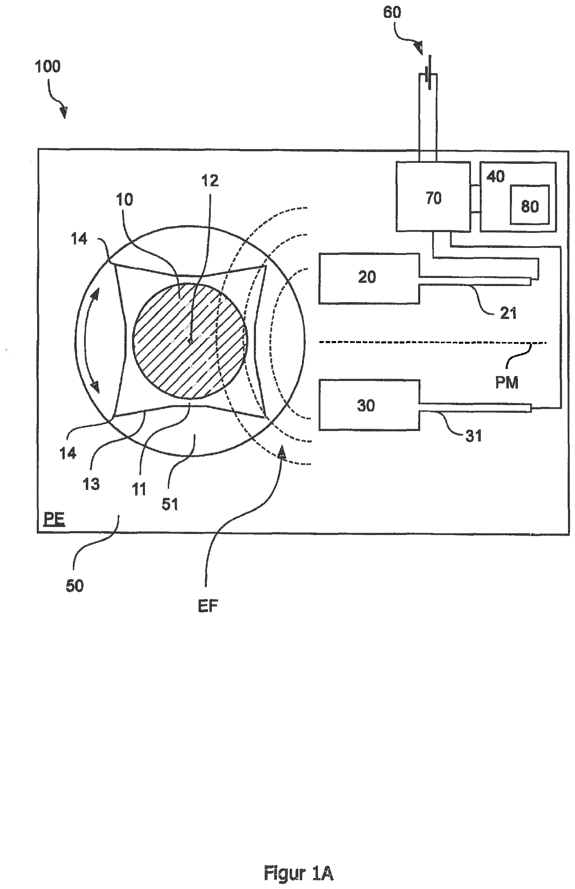

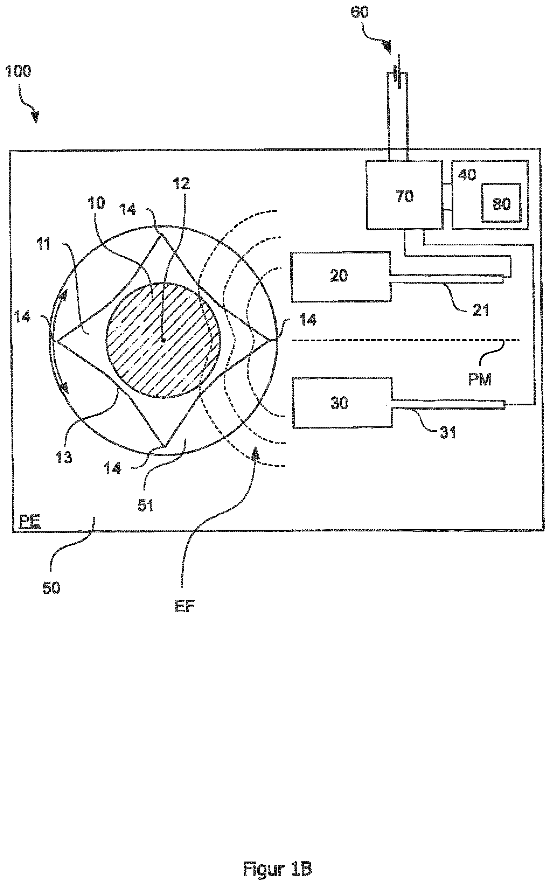

Die Figuren 1A und 1B zeigen eine erfindungsgemäße Messanordnung 100 zum Ermitteln der Drehposition, Drehzahl und/oder Drehrichtung der drehbaren Welle 10 in einer ersten bzw. einer zweiten Drehposition. Eine erste Elektrode 20 und eine zweite Elektrode 30, die jeweils Kondensatorelemente bilden, sind in einer Elektrodenebene PE symmetrisch zu einer Mittelebene PM (in den Figuren senkrecht zur Elektrodenebene PM bzw. Zeichenebene) angeordnet. Die Elektroden 20, 30 bilden endseitig flächige Kondensatorelemente aus, die hier plattenförmig mit rechteckiger Grundform aus einem leitenden, insbesondere metallischem, Material, z. B. Kupfer, ausgebildet sind. Die Wellenachse 12 der Welle 10 steht senkrecht auf die Elektrodenebene PE und verläuft in der Mittelebene PM. An die Elektroden 20, 30 ist eine elektrische Spannung angelegt, die im Umfeld der Elektroden 20, 30 ein elektrisches Feld EF erzeugen, dessen Feldlinien als gestrichelte Linien angedeutet sind. In Figur 1A ist das elektrische Feld EF in einem Referenzzustand, d.h. im Wesentlichen ungestört, dargestellt, während es in der Figur 1B in einem geänderten bzw. gestörten Zustand dargestellt ist, was insbesondere durch die verformten Feldlinien illustriert ist.

Die Welle 10 weist einen Messabschnitt 11 mit einer Unrundheit in Form des nicht rotationssymmetrischen, aber punktsymmetrischen, Wellenprofils 13 auf. Das unrunde Wellenprofil 13 des Messabschnitts 11 steht hier radial über den geschnitten dargestellten kreisrunden Querschnitt der Welle 10 über, könnte aber auch radial gegenüber dem Querschnitt der Welle 10 zurückspringen oder radial bündig mit der Welle 10 ausgebildet sein. Die Welle 10 und der Messabschnitt 11 sind hier aus Metall, d. h. insbesondere elektrisch leitend. Das Wellenprofil 13 ist als ein Zahnprofil ausgebildet, das gleichmäßig über den Umfang verteilt vier Messerhebungen 14 aufweist. Der Messabschnitt 11 ist so angeordnet, dass die Messerhebungen 14 als erfindungsgemäße Unrundheiten mit dem elektrischen Feld EF wechselwirken, insbesondere wenn eine Messerhebung 14 aufgrund einer Drehbewegung der Welle 10 die Elektroden 20, 30 passiert, wie in Figur 1 B dargestellt. Durch die Drehung des unrunden Messabschnitts 11 wird eine Änderung des elektrischen Feldes EF bewirkt.

Die Elektroden 20, 30 sind auf einer Leiterplatte 50 aus einem elektrisch isolierenden Material, beispielsweise aus Kunststoff, angeordnet, die eine kreisförmige Messausnehmung 51 aufweist, in die sich der Messabschnitt 11 hinein erstreckt. Die Elektroden 20, 30 sind über Leiterbahnen 21 bzw. 31 mit einem Mikrocontroller 70 leitend verbunden, der wiederum mit einer Auswertungseinheit 40 leitend verbunden ist und von einer Spannungsquelle 60 mit elektrischer Leistung versorgt wird. Der Mikrocontroller 70 und die Auswertungseinheit 40, die eine Filtereinheit 80, vorzugsweise einen Bandpassfilter, umfasst, sind ebenfalls auf der Leiterplatte 50 angeordnet.

Bei einer Drehung der Welle 10, die drehfest oder einteilig mit dem Messabschnitt 11 verbunden ist, bewirkt jede Unrundheit des Messabschnitts 11 eine Änderung des elektrischen, vorzugsweise elektrostatischen, Feldes EF, das im Umfeld der Elektroden 20, 30 erzeugt wird. Diese Änderung des elektrischen Feldes EF in Form ist als Kapazitätsänderung des Kondensators, den die Elektroden 20, 30 miteinander bilden, durch die Auswertungseinheit 70 kapazitiv erfassbar.

Beispielsweise wird durch einen Ausgang des Mikrocontrollers 70 eine Spannung, vorzugsweise eine gleichmäßig gepulste Gleichspannung, zum Beispiel in Form von Rechtecksimpulsen mit einer Spannungsamplitude von 0 V und 5 V, an die erste Elektrode 20 angelegt. Ein entsprechendes elektrisches Feld EF wird erzeugt. Wenn sich eine Messerhebung 14 durch das elektrische Feld EF hindurch bewegt, d. h. hindurch dreht, kommt es zu einer Änderung der Kapazität des durch die Kondensatorelemente der Elektroden 20, 30 gebildeten Kondensators. Diese Kapazitätsänderung ist messbar, beispielsweise durch eine Spannungsänderung an der zweiten Elektrode 30, die an einem Eingang des Mikrocontrollers 70 abgreifbar ist. Die Auswertungseinheit 40, die auch in den Mikrocontroller 70 integriert sein könnte, erfasst die Änderung des elektrischen Feldes EF als eine zählbare Signaländerung bzw. -schwankung, insbesondere in Form eines Anstiegs oder eines Abfalls eines Spannungssignals. Aus der Erfassung der Anzahl der Änderungen ist die Drehposition und/oder die Drehzahl der Welle 10 ermittelbar, wobei die Anzahl der vorhandenen Messerhebungen 14 des Messabschnitt 11 in der Auswertungseinheit 40 vorzugssweise hinterlegt ist.

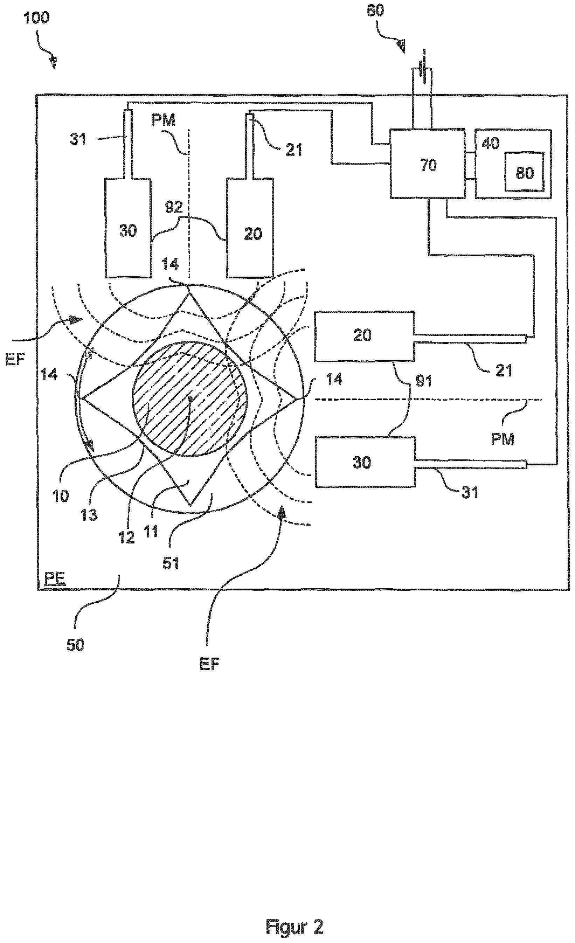

Figur 2 zeigt eine Ausführungsform einer erfindungsgemäßen Messanordnung 100 mit zwei Elektrodenpaaren 91, 92 mit jeweils ersten Elektroden 20 und zweiten Elektroden 30. Die Elektrodenpaare 91, 92 sind bezogen auf den Umfang der Welle 10 versetzt zueinander angeordnet. Dadurch kann einerseits die Genauigkeit der Ermittlung der Drehposition und/oder Drehzahl erhöht werden. Andererseits kann zusätzlich die Drehrichtung der Welle 10 ermittelt werden, insbesondere durch eine Erfassung der Reihenfolge der zeitlich versetzten Änderung des elektrischen Feldes EF durch das erste Elektrodenpaar 91 und das zweite Elektrodenpaar 92. Abhängig von der Drehrichtung bewirkt eine bestimmte Messerhebung 14 eine Änderung des elektrischen Feldes EF zuerst bezüglich des ersten Elektrodenpaares 91 und zeitlich versetzt bezüglich des zweiten Elektrodenpaares 92, woraus die Drehrichtung der Welle 10 ermittelt werden kann.

Eine erfindungsgemäße Messanordnung 100 ist einfach umsetzbar und eignet sich insbesondere zur Anwendung für die Ermittlung der Drehposition, Drehzahl und/oder Drehrichtung einer Welle eines Elektromotors von elektromotorisch verstellbaren Einrichtungen eines Fahrzeugs, beispielsweise eines Schiebedaches, Fensterhebers, Außenspiegels, Sitzes, Cabriodaches oder einer Verriegelung.

An dieser Stelle sei darauf hingewiesen, dass alle oben beschriebenen Aspekte der Erfindung für sich alleine gesehen und in jeder Kombination, insbesondere die in den Zeichnungen dargestellten Details, als wesentlich für die Erfindung beansprucht werden. Entsprechendes gilt für die erläuterten Verfahrensschritte. Abänderungen hiervon sind dem Fachmann geläufig.

### Bezugszeichenliste:

- 10: Welle
- 11: Messabschnitt
- 12: Wellenachse
- 13: Wellenprofil
- 14: radiale Messerhebung
- 20: erste Elektrode
- 21: Leiterbahn
- 30: zweite Elektrode
- 31: Leiterbahn
- 40: Auswertungseinheit
- 50: Leiterplatte
- 51: Messausnehmung
- 60: Spannungsquelle
- 70: Mikrocontroller
- 80: Filtereinheit
- 91: erstes Elektrodenpaar
- 92: zweites Elektrodenpaar
- 100: Messanordnung
- EF: elektrisches Feld
- PM: Mittelebene
- PE: Elektrodenebene

## Patentansprüche

1. Messanordnung (100) zum Ermitteln der Drehposition, Drehzahl und/oder Drehrichtung einer Welle (10), insbesondere eines Elektromotors einer elektromotorisch verstellbaren Einrichtung eines Fahrzeugs, umfassend:
- mindestens eine erste Elektrode (20) und mindestens eine zweite Elektrode (30), die jeweils Kondensatorelemente bilden,
wobei an die Elektroden (20, 30) eine elektrische Spannung derart anlegbar ist, dass die Elektroden (20,30) ein elektrisches Feld (EF) erzeugen;
- eine drehbare Welle (10) mit einem Messabschnitt (11), der eine Unrundheit aufweist,
wobei der Messabschnitt (11) derart relativ zu den Elektroden (20,30) angeordnet ist, dass eine Drehung der Welle (10) eine Änderung des elektrischen Feldes (EF) bewirkt;
wobei die Wellenachse (12) senkrecht zu einer Elektrodenebene (PE) angeordnet ist, in der die Elektroden (20, 30) angeordnet sind;
- eine mit einer Elektrode (20,30) leitend verbundene Auswertungseinheit (40), die dazu ausgebildet ist, eine Änderung des elektrischen Feldes (EF) kapazitiv zu erfassen.

2. Messanordnung (100) nach Anspruch 1,
**dadurch gekennzeichnet, dass**
mindestens zwei Elektrodenpaare (91, 92) aus jeweils ersten und zweiten Elektroden (20, 30) vorgesehen sind,
wobei ein erstes Elektrodenpaar (91) zum Ermitteln der Drehposition und/oder Drehzahl der Welle (10) und ein zweites Elektrodenpaar (92) zum Ermitteln der Drehrichtung der Welle (10) ausgebildet ist.

3. Messanordnung (100) nach Anspruch 1 oder 2,
**dadurch gekennzeichnet, dass**
der Messabschnitt (11) der Welle (10) ein nicht-rotationssymmetrisches Wellenprofil (13), vorzugsweise mit mindestens einer radialen Messerhebung (14), aufweist.

4. Messanordnung (100) nach einem der vorhergehenden Ansprüche,
**dadurch gekennzeichnet, dass**
das Wellenprofil (13) über den Umfang verteilte radiale Messerhebungen (14) aufweist.

5. Messanordnung (100) nach einem der vorhergehenden Ansprüche,
**dadurch gekennzeichnet, dass**
sich mindestens zwei Messerhebungen (14) unterschiedlich weit in radialer Richtung erstrecken.

6. Messanordnung (100) nach einem der vorhergehenden Ansprüche,
**dadurch gekennzeichnet, dass**
das Wellenprofil (13) ein Zahnprofil oder ein polygonales Profil ist, wobei das Wellenprofil (13) vorzugsweise 2 bis 16 radiale Messerhebungen (14) aufweist.

7. Messanordnung (100) nach einem der vorhergehenden Ansprüche,
**dadurch gekennzeichnet, dass**
die Wellenachse (12) parallel zu einer Mittelebene (PM) der Elektroden (20,30) angeordnet ist.

8. Messanordnung (100) nach einem der vorhergehenden Ansprüche,
**dadurch gekennzeichnet, dass**
die Messanordnung (100) eine Leiterplatte (50) umfasst, auf der die Elektroden (20, 30) angeordnet sind.

9. Messanordnung (100) nach Anspruch 8,
**dadurch gekennzeichnet, dass**
die Leiterplatte (50) eine Messausnehmung (51) aufweist, wobei sich der Messabschnitt (11) der Welle (10) in die Messausnehmung (51) hinein erstreckt.

10. Messanordnung (100) nach einem der vorhergehenden Ansprüche,
**dadurch gekennzeichnet, dass**
die Messanordnung (100) einen Mikrocontroller (70) umfasst, der dazu ausgebildet ist, eine Elektrode (20, 30) mit einer gepulsten Gleichspannung zu versorgen.

11. Messanordnung (100) nach einem der vorhergehenden Ansprüche,
**dadurch gekennzeichnet, dass**
die Auswertungseinheit (40) einen Bandpassfilter umfasst, der dazu ausgebildet ist, ein Frequenzband eines erfassten Messsignals passieren zu lassen.

12. Messanordnung (100) nach einem der vorhergehenden Ansprüche,
**dadurch gekennzeichnet, dass**
der Messabschnitt (11), insbesondere die Welle (10), elektrisch leitfähig ist.

13. Messanordnung (100) nach einem der vorhergehenden Ansprüche,
**dadurch gekennzeichnet, dass**
die Welle (10) eine Motorabtriebswelle eines Elektromotors einer elektromotorisch verstellbaren Einrichtung eines Fahrzeugs, wie eines Schiebedaches, Fensterhebers, Außenspiegels, Sitzes, Cabriodaches oder einer Verriegelung, ist.

14. Verfahren zum Ermitteln der Drehposition, Drehzahl und/oder Drehrichtung einer Welle (10), insbesondere eines Elektromotors einer elektromotorisch verstellbaren Einrichtung eines Fahrzeugs, umfassend die folgenden Schritte:
a) Bereitstellen mindestens einer ersten Elektrode (20) und mindestens einer zweiten Elektrode (30), die jeweils Kondensatorelemente bilden;
b) Anlegen einer Spannung an die Elektroden (20, 30), um ein elektrisches Feld (EF) zu erzeugen;
c) Drehen einer Welle (10) die einen Messabschnitt (11) mit einer Unrundheit aufweist,
wobei der Messabschnitt (11) derart relativ zu den Elektroden (20,30) angeordnet ist, dass eine Drehung der Welle (10) eine Änderung des elektrischen Feldes (EF) bewirkt und
die Wellenachse (12) senkrecht zu einer Elektrodenebene (PE) angeordnet ist, in der die Elektroden (20, 30) angeordnet sind;
d) Erfassen der Änderung des elektrischen Feldes (EF) durch eine kapazitive Messung mit einer Auswertungseinheit (40), die mit einer Elektrode (20, 30) leitend verbunden ist;
e) Ermitteln der Drehposition, Drehzahl und/oder Drehrichtung der Welle (10) durch die Auswertungseinheit (40), basierend auf der erfassten Änderung des elektrischen Feldes (EF).

15. Verwendung einer Messanordnung gemäß einem der Ansprüche 1 bis 13 zum Ermitteln der Drehposition, Drehzahl und/oder Drehrichtung einer Welle eines Elektromotors einer elektromotorisch verstellbaren Einrichtung eines Fahrzeugs, wie eines Schiebedaches, Fensterhebers, Außenspiegels, Sitzes, Cabriodaches oder einer Verriegelung.

## Claims

1. A measurement arrangement (100) for determining the rotational position, rotational speed and/or rotational direction of a shaft (10), in particular of an electric motor of an electromotively adjustable device of a vehicle, comprising:
- at least one first electrode (20) and at least one second electrode (30) constituting in each case capacitor elements,
wherein an electrical voltage may be applied to the electrodes (20, 30) such that the electrodes (20, 30) generate an electrical field (EF);
- a rotatable shaft (20) with a measurement portion (11) having an eccentricity,
wherein the measurement portion (11) is arranged relative to the electrodes (20, 30) such that a rotation of the shaft (10) causes the electrical field (EF) to change;
wherein the shaft axis (12) is arranged perpendicular to an electrode plane (PE), in which the electrodes (20, 30) are arranged;
- an evaluation unit (40) conductively connected to an electrode (20, 30) and designed to detect a change of the electrical field (EF) capacitively.

2. The measurement arrangement (100) according to claim 1,
**characterized in that**
at least two electrode pairs (91, 92) of at least first and second electrodes (20, 30) are provided,
wherein a first electrode pair (91) is designed to determine the rotational position and/or the rotational speed of the shaft (10), and a second electrode pair (92) is designed to determine the rotational direction of the shaft (10).

3. The measurement arrangement (100) according to claim 1 or 2,
**characterized in that**
the measurement portion (11) of the shaft (10) has a non-rotationally symmetrical shaft profile (13), preferably with at least one radial measurement elevation (14).

4. The measurement arrangement (100) according to any one of the preceding claims,
**characterized in that**
the shaft profile (13) has radial measurement elevations (14) distributed over the circumference.

5. The measurement arrangement (100) according to any one of the preceding claims,
**characterized in that**
at least two measurement elevations (14) extend to different extents in the radial direction.

6. The measurement arrangement (100) according to any one of the preceding claims,
**characterized in that**
the shaft profile (13) is a tooth profile or a polygonal profile, wherein the shaft profile (13) preferably has 2 to 16 measurement elevations (14).

7. The measurement arrangement (100) according to any one of the preceding claims,
**characterized in that**
the shaft axis (12) is arranged in parallel to a median plane (PM) of the electrodes (20, 30).

8. The measurement arrangement (100) according to any one of the preceding claims,
**characterized in that**
the measurement arrangement (100) comprises a circuit board (50), on which the electrodes (20, 30) are arranged.

9. The measurement arrangement (100) according to claim 8,
**characterized in that**
the circuit board (50) has a measurement recess (51), wherein the measurement portion (11) of the shaft (10) extends into the measurement recess (51).

10. The measurement arrangement (100) according to any one of the preceding claims,
**characterized in that**
the measurement arrangement (100) comprises a microcontroller (70), which is designed to supply an electrode (20, 30) with a pulsed DC voltage.

11. The measurement arrangement (100) according to any one of the preceding claims,
**characterized in that**
the evaluation unit (40) comprises a bandpass filter, which is designed to allow a frequency band of a detected measurement signal to pass.

12. The measurement arrangement (100) according to any one of the preceding claims,
**characterized in that**
the measurement portion (11), in particular the shaft (10), is electrically conductive.

13. The measurement arrangement (100) according to any one of the preceding claims,
**characterized in that**
the shaft (10) is a motor output shaft of an electric motor of an electromotively adjustable device of the vehicle, such as of a sunroof, a window regulator, an exterior mirror, a seat, a convertible roof, or a locking device.

14. A method for determining the rotational position, rotational speed and/or rotational direction of a shaft (10), in particular of an electric motor of an electromotively adjustable device of a vehicle, comprising the steps of:
a) providing at least one first electrode (20) and at least one second electrode (30) constituting in each case capacitor elements;
b) applying a voltage to the electrodes (20, 30) so as to generate an electrical field (EF);
c) rotating a shaft (10), which has a measurement portion (11) having an eccentricity,
wherein the measurement portion (11) is arranged relative to the electrodes (20, 30) such that a rotation of the shaft (10) causes the electrical field (EF) to change, and
the shaft axis (12) is arranged perpendicular to an electrode plane (PE), in which the electrodes (20, 30) are arranged;
d) detecting the change of the electrical field (EF) by capacitively measuring by means of an evaluation unit (40), which is conductively connected to an electrode (20, 30);
e) determining the rotational position, rotational speed and/or rotational direction of the shaft (10) by the evaluation unit (40) based on the detected change of the electrical field (EF).

15. Use of a measurement arrangement according to any one of claims 1 to 13 for determining the rotational position, rotational speed and/or rotational direction of a shaft of an electric motor of an electromotively adjustable device of a vehicle, such as of a sunroof, a window regulator, an exterior mirror, a seat, a convertible roof, or a locking device.

## Revendications

1. Agencement de mesure (100) destiné à déterminer la position de rotation, la vitesse de rotation et/ou le sens de rotation d'un arbre (10), en particulier d'un moteur électrique d'un dispositif réglable par moteur électrique d'un véhicule, comprenant :
- au moins une première électrode (20) et au moins une deuxième électrode (30) qui forment respectivement des éléments de condensateur,
sachant qu'une tension électrique peut être appliquée aux électrodes (20, 30) de telle manière que les électrodes (20, 30) génèrent un champ électrique (EF) ;
- un arbre (10) tournant comportant une section de mesure (11) qui présente un faux-rond,
sachant que la section de mesure (11) est disposée relativement aux électrodes (20, 30) de telle manière qu'une rotation de l'arbre (10) provoque un changement du champ électrique (EF) ;
sachant que l'axe d'arbre (12) est disposé perpendiculairement à un plan d'électrodes (PE) dans lequel les électrodes (20, 30) sont disposées ;
- une unité d'évaluation (40) reliée de manière conductrice à une électrode (20, 30), qui est configurée pour saisir de manière capacitive un changement du champ électrique (EF).

2. Agencement de mesure (100) selon la revendication 1,
**caractérisé en ce que**
au moins deux paires d'électrodes (91, 92) constituées respectivement par des premières et deuxièmes électrodes (20, 30) sont prévues,
sachant qu'une première paire d'électrodes (91) est constituée pour déterminer la position de rotation et/ou la vitesse de rotation de l'arbre (10) et une deuxième paire d'électrodes (92), pour déterminer le sens de rotation de l'arbre (10).

3. Agencement de mesure (100) selon la revendication 1 ou 2,
**caractérisé en ce que**
la section de mesure (11) de l'arbre (10) présente un profil d'arbre (13) non symétrique en rotation, de préférence avec au moins une élévation de mesure (14) radiale.

4. Agencement de mesure (100) selon l'une des revendications précédentes,
**caractérisé en ce que**
le profil d'arbre (13) présente des élévations de mesure (14) radiales réparties sur le pourtour.

5. Agencement de mesure (100) selon l'une des revendications précédentes,
**caractérisé en ce que**
au moins deux élévations de mesure (14) s'étendent à un éloignement différent en direction radiale.

6. Agencement de mesure (100) selon l'une des revendications précédentes,
**caractérisé en ce que**
le profil d'arbre (13) est un profil denté ou un profil polygonal, sachant que le profil d'arbre (13) présente de préférence 2 à 16 élévations de mesure (14) radiales.

7. Agencement de mesure (100) selon l'une des revendications précédentes,
**caractérisé en ce que**
l'axe d'arbre (12) est disposé parallèlement à un plan médian (PM) des électrodes (20, 30).

8. Agencement de mesure (100) selon l'une des revendications précédentes,
**caractérisé en ce que**
l'agencement de mesure (100) comprend une plaque conductrice (50) sur laquelle les électrodes (20, 30) sont disposées.

9. Agencement de mesure (100) selon la revendication 8,
**caractérisé en ce que**
la plaque conductrice (50) présente un évidement de mesure (51), sachant que la section de mesure (11) de l'arbre (10) s'étend jusque dans l'évidement de mesure (51).

10. Agencement de mesure (100) selon l'une des revendications précédentes,
**caractérisé en ce que**
l'agencement de mesure (100) comprend un microcontrôleur (70) qui est configuré pour alimenter une électrode (20, 30) en une tension continue puisée.

11. Agencement de mesure (100) selon l'une des revendications précédentes,
**caractérisé en ce que**
l'unité d'évaluation (40) comprend un filtre passe-bande qui est configuré pour laisser passer une bande de fréquence d'un signal de mesure saisi.

12. Agencement de mesure (100) selon l'une des revendications précédentes,
**caractérisé en ce que**
la section de mesure (11), en particulier l'arbre (10), est électriquement conductrice.

13. Agencement de mesure (100) selon l'une des revendications précédentes,
**caractérisé en ce que**
l'arbre (10) est un arbre de sortie de moteur d'un moteur électrique d'un dispositif réglable par moteur électrique d'un véhicule, comme d'un toit ouvrant, d'un lève-vitre, d'un rétroviseur extérieur, d'un siège, d'un toit de décapotable ou d'un verrouillage.

14. Procédé destiné à déterminer la position de rotation, la vitesse de rotation et/ou le sens de rotation d'un arbre (10), en particulier d'un moteur électrique d'un dispositif réglable par moteur électrique d'un véhicule, comprenant les étapes suivantes :
a) mise à disposition d'au moins une première électrode (20) et d'au moins une deuxième électrode (30) qui forment respectivement des éléments de condensateur ;
b) application d'une tension aux électrodes (20, 30) pour générer un champ électrique (EF) ;
c) rotation d'un arbre (10) qui présente une section de mesure (11) pourvue d'un faux-rond,
sachant que la section de mesure (11) est disposée relativement aux électrodes (20, 30) de telle manière qu'une rotation de l'arbre (10) provoque un changement du champ électrique (EF) et
l'axe d'arbre (12) est disposé perpendiculairement à un plan d'électrodes (PE) dans lequel les électrodes (20, 30) sont disposées ;
d) saisie du changement du champ électrique (EF) par une mesure capacitive avec une unité d'évaluation (40) qui est reliée de manière conductrice à une électrode (20, 30) ;
e) détermination de la position de rotation, de la vitesse de rotation et/ou du sens de rotation de l'arbre (10) par l'unité d'évaluation (40), sur la base du changement saisi du champ électrique (EF).

15. Utilisation d'un agencement de mesure selon l'une des revendications 1 à 13 pour déterminer la position de rotation, la vitesse de rotation et/ou le sens de rotation d'un arbre d'un moteur électrique d'un dispositif réglable par moteur électrique d'un véhicule, comme d'un toit ouvrant, d'un lève-vitre, d'un rétroviseur extérieur, d'un siège, d'un toit de décapotable ou d'un verrouillage.
